Europäisches Patentamt

European Patent Office

Office européen des brevets

(11) Veröffentlichungsnummer: **0 153 976**
**A2**

## (12) EUROPÄISCHE PATENTANMELDUNG

(21) Anmeldenummer: **84103875.5**

(22) Anmeldetag: **07.04.84**

(51) Int. Cl.⁴: **B 08 B 9/12**

(30) Priorität: **08.12.83 DE 3344325**

(43) Veröffentlichungstag der Anmeldung:
**11.09.85 Patentblatt 85/37**

(84) Benannte Vertragsstaaten:
**BE DE FR GB**

(71) Anmelder: **Kolbus GmbH & Co. KG**
**Osnabrücker Strasse 77**
**D-4993 Rahden(DE)**

(71) Anmelder: **Leifeld & Lemke Maschinenfabrik GmbH & Co. KG**
**Osnabrücker Strasse 77**
**D-4993 Rahden(DE)**

(72) Erfinder: **Budde, Rolf**
**Niederacker 1**
**D-4972 Löhne 4(DE)**

(54) **Verfahren zum Prüfen von entleerten Fässern, insbesondere mit Füll- und Zapfarmaturen versehene Bierfässer, auf ihre Wiederverwendung.**

(57) Zum Prüfen von entleerten Fässern, insbesondere mit Füll- und Zapfarmaturen versehene Bierfässer, auf ihre Wiederverwendung wird ein Sollwert, beispielsweise die Leitfähigkeit, der im Faß verbleibenden Restflüssigkeit gemessen und die Weiterbehandlung bei Abweichung von einem vorgegebenen Sollwert unterbunden.

Verfahren zum Prüfen von entleerten Fässern, insbesondere mit Füll- und Zapfarmaturen versehene Bierfässer, auf ihre Wiederverwendung

---

Die Erfindung betrifft ein Verfahren zum Prüfen von entleerten Fässern, insbesondere mit Füll- und Zapfarmaturen versehene Bierfässer, auf ihre Wiederverwendung.

Zum Prüfen von Bierfässern mit eingeschraubten Füll- und Zapfarmaturen, sogenannte KEG-Fässer, auf ihre Wiederverwendung sind verschiedene Verfahren bekannt geworden. In der DE-PS 19 08 185 wird ein Verfahren unter Schutz gestellt, bei dem der Druck des vom Entleerungsvorgang im Faß verbliebenen Druckgases überprüft und bei einem noch vorhandenen ausreichenden Druck der Reinigungsvorgang eingeleitet, bei einem zu geringen Druck des Gases hingegen die Weiterbehandlung unterbrochen wird. Ferner ist aus der DE-PS 30 08 762 ein Prüfungsverfahren bekannt, mit dem das im Bierfaß nach dem Entleeren verbleibende, einen Oberdruck erzeugende Treibgas Kohlendioxid identifiziert und der Reinigungsprozeß lediglich bei Ermittlung des reinen Kohlendioxids ausgeführt, dagegen das Bierfaß bei Ermittlung eines verunreinigten Sollgases, wie Luft oder andere Fremdgase, gesondert behandelt wird.

Wie die Praxis zeigt, werden Bierfässer mit eingeschraubten Füll- und Zapfarmaturen zweckentfremdet verwendet, d. h. sie dienen als Behälter zur Lagerung von anderen Flüssigkeiten, beispielsweise Mineralöl, Milch, Wasser u. a. Zum Auffüllen wird das Faß durch Herausschrauben der Füll- und Zapfarmatur geöffnet. Da KEG-Fässer lediglich mit nur einem Zugang im Faßboden versehen sind, besteht die Notwendigkeit, die Fässer zum Heraustreiben der Fremdflüssigkeit in bekannter Weise wieder unter Druck zu setzen.

Herkömmliche Verfahrensschritte zum Reinigen und Sterilisieren von entleerten Bierfässern reichen für diese zweckentfremdet verwendeten Fässer nicht aus, so daß diese Fässer vorab einem speziellen Reinigungsverfahren unterworfen werden müssen, um den biologischen Anforderungen bei der Bierabfüllung gerecht zu werden.

Beide zum Stand der Technik genannten Verfahren machen keine Aussage darüber, ob die Fässer mit Fremdprodukten belegt waren und stellen infolgedessen kein sicheres Prüfverfahren dar.

Aufgabe der Erfindung ist es, ein Verfahren vorzuschlagen, mit dem eine absolut zuverlässige Prüfung von entleerten Fässern, insbesondere mit Füll- und Zapfarmaturen versehene Bierfässer, auf ihre Wiederverwendung durchführbar ist. Das erfindungsgemäße Verfahren sieht dazu vor, daß ein Sollwert der im Faß verbleibenden Restflüssigkeit gemessen und die Weiterbehandlung bei Abweichung von einem vorgegebenen Sollwert unterbunden wird. Dabei kann in einem bevorzugten Verfahren als Sollwert die Leitfähigkeit der Restflüssigkeit gemessen werden.

Die Erfindung geht von der Erkenntnis aus, daß ausschließlich durch die Identifizierung des im Faß stets verbleibenden Restbieres eine absolut sichere Aussage über die Abfülleignung gegeben ist. Das zu prüfende Bierfaß wird ausschließlich bei Übereinstimmung des Leitfähigkeitsmeßwertes der Restbiermenge mit dem vorgegebenen Sollwert dem Reinigungsprozeß zugeführt, jedoch bei einem zu hohen oder zu niedrigen Leitfähigkeitsmeßwert aus dem Reinigungsprozeß ausgeschieden und einem speziellen Behandlungsprozeß zugeführt.

**0153976**

Aufgrund der sehr unterschiedlichen Leitfähigkeiten der für eine zweckentfremdete Nutzung in Frage kommenden Flüssigkeiten bietet die Leitfähigkeitsmessung eine Gewähr für eine absolut sichere Prüfmethode. Zur Verdeutlichung werden beispielsweise einige Leitfähigkeitswerte von Fremdprodukten angeführt: Mineralöl 25, Milch 4.000, Wasser 400 µS/cm; demgegenüber besitzt das Bier, beispielsweise Altbier, einen Leitfähigkeitswert von 1.120 µS/cm.

Zur Durchführung der Messung stehen an sich bekannte Leifähigkeitsmeßeinrichtungen mit einem Flüssigkeitsfühler zur Verfügung, die in der Abflußleitung der Reinigungsstation angeordnet sein können.

Patentansprüche

1. Verfahren zum Prüfen von entleerten Fässern, insbesondere mit Füll- und Zapfarmaturen versehene Bierfässer, auf ihre Wiederverwendung, dadurch gekennzeichnet, daß ein Sollwert der im Faß verbleibenden Restflüssigkeit gemessen und die Weiterbehandlung bei Abweichung von einem vorgegebenen Sollwert unterbunden wird.

2. Verfahren nach Anspruch 1, dadurch gekennzeichnet, daß die Leitfähigkeit der Restflüssigkeit als Sollwert gemessen wird.